# EUROPEAN PATENT SPECIFICATION

(11) **EP 3 789 178 B1**
(45) Date of publication and mention of the grant of the patent: **27.11.2024**
(21) Application number: 20810854.8
(22) Date of filing: 22.05.2020
(51) Int. Cl.: B29C 45/27, B29C 49/06, B29C 45/28, B29B 11/08, B29C 49/12, B29K 105/00, B29L 31/00

(54) **INJECTION STRETCH BLOW MOLDING MACHINE COMPRISING A HOT-RUNNER DEVICE**
SPRITZSTRECKBLASMASCHINE UMFASSEND EINE HEISSKANALVORRICHTUNG
MOULAGE PAR INJECTION-ÉTIRAGE-SOUFFLAGE COMPRENANT UN DISPOSITIF À CANAL CHAUD

(30) Priority: 11.06.2019 JP 2019108789
(43) Date of publication of application: 10.03.2021
(73) Proprietor: AOKI TECHNICAL LABORATORY, INC., Hanishina-gun, Nagano 389-0603 (JP)
(72) Inventor: MATSUZAWA, Motohiro, Nagano 389-0603 (JP)
(74) Representative: Casalonga
(86) International application number: PCT/JP2020/020222
(87) International publication number: WO 2020/250641

(56) References cited:
- WO-A1-2014/050768
- CN-U- 203 712 982
- JP-A- 2000 094 491
- JP-A- 2000 094 491
- JP-A- H0 542 565
- JP-A- H0 890 608
- JP-A- S62 108 029
- US-A- 5 227 181

## Description

### Technical Field

The present invention relates to an injection stretch blow molding machine having a hot runner apparatus and to a method for branching a molten resin in said hot runner apparatus.

### Background Art

From JP 2000 094491 A there is already known a hot runner apparatus comprising:
a plurality of hot runner nozzles arranged in a row and having an upward injection direction;
a horizontal runner portion disposed below the hot runner nozzles along a row direction of the hot runner nozzles;
vertical runner portions upwardly extending from the horizontal runner portion for guiding a molten resin flowing through the horizontal runner portion into the hot runner nozzles; and
an introducing runner portion continuous with an intermediate portion of the horizontal runner portion for guiding a molten resin from an introducing port, into which the molten resin froman injection apparatus having an injection direction in a horizontal direction is fed, toward the horizontal runner portion,
the introducing runner portion has a structure in which the introducing runner portion is bent toward the horizontal runner portion after reaching an elevation plane passing through a position of the horizontal runner portion in an up-and-down direction and continuous with the intermediate portion of the horizontal runner portion in the elevation plane,
the hot runner apparatus is configured to be provided under an injection molding mold of an injection stretch blow molding machine,
the injection molding mold including:
   a plurality of preform molding portions; and a plurality of gates continuous with the preform molding portions,
   the plurality of hot runner nozzles are connectable to the respective gates, and
   a molten resin injected by the respective hot runner nozzles is filled into the respective preform molding portions through the gates.

As shown in Patent Literature 1 as well as FIGS. 1, 2, and 3, an injection stretch blow molding machine 1 may be configured to include three stages: an injection molding section 3 that injects a molten resin from an injection apparatus 2 to injection-mold preforms; a stretch blow molding section 5 that obtains hollow molded bodies by stretching and blowing the preforms, having been released from an injection molding mold 4 of the injection molding section 3, using a blow molding mold; and an ejecting section 6 that releases the hollow molded bodies from the blow molding mold of the stretch blow molding section 5 and sends the hollow molded bodies to the outside of the molding machine.

The above-described injection stretch blow molding machine 1 includes lip molds 7 at three places in a rotary plate 8. By the rotation of the rotary plate 8, the lip mold 7 intermittently moves so as to sequentially correspond to the positions of the injection molding section 3, the stretch blowmolding section 5, and the ejecting section 6. The lip mold 7 holding preforms in the injection molding section 3 conveys the preforms to the subsequent stretch blow molding section 5. The lip mold 7 holding the hollow molded bodies molded in the stretch blow molding section 5 conveys the hollow molded bodies to the subsequent ejecting section 6. The lip mold 7 having released the hollow molded bodies in the ejecting section 6 moves to the subsequent injection molding section 3. In this manner, such hollow molded bodies are produced in a continuous manner.

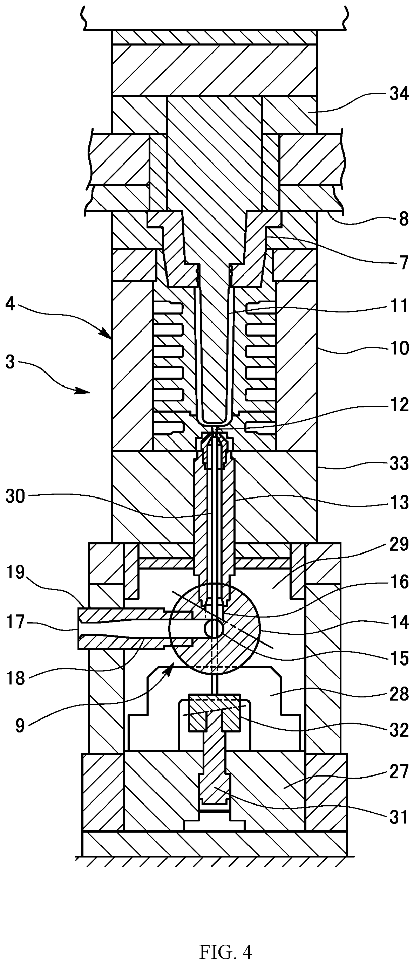

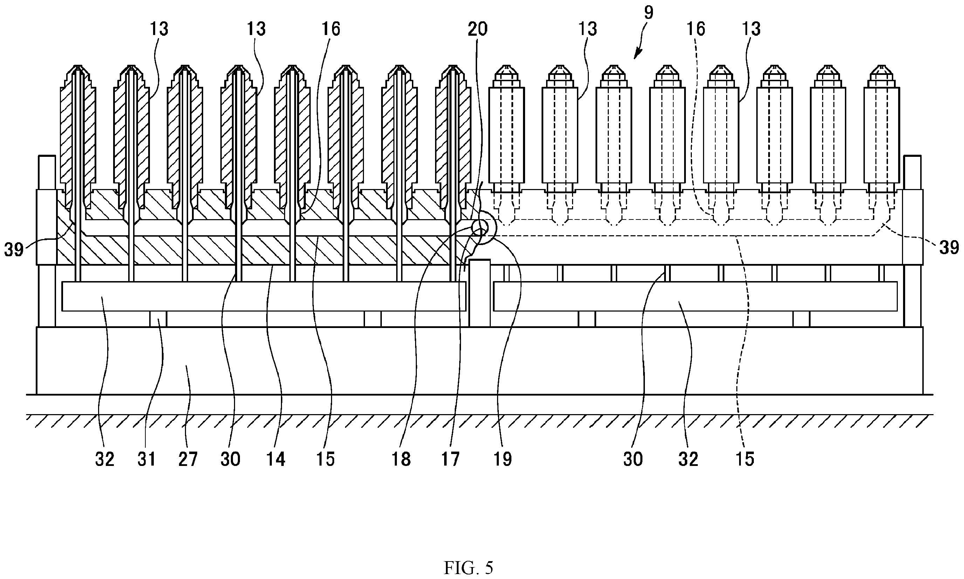

As shown in FIGS. 4 and 5, the above-described injection molding section 3 of the injection stretch blow molding machine 1 includes: the injection molding mold 4 including a multi-cavity mold for injection-molding preforms; and a hot runner apparatus 9, over which the injection molding mold 4 is disposed, that is configured to branch the molten resin fed from the injection apparatus 2 and send the branched molten resin to preform molding portions of the injection molding mold 4.

The above-described lip mold 7 configured to undertake roles of forming outer peripheral surface shapes of mouth portions of the preforms and conveying the preforms and the hollow molded bodies with their mouth portions being held; a cavity mold 10 configured to form outer peripheral surface shapes of body portions and outer surface shapes of bottom portions; and core molds 11 each configured to form an inner surface shape of the preform over an area from the mouth portion to the bottom portion are combined together in the above-described injection molding mold 4.

When carrying out the injection molding of the preforms, mold clamping of the injection molding mold 4 is done by overlaying the lip mold 7 on the top of the cavity mold 10 while inserting the core molds 11 descending from above into the cavity mold 10 so as to pass through the centers of the lip molds 7. After that, the molten resin is injected into the preform molding portions from the hot runner apparatus 9 through a gate 12 provided in a lower part of the cavity mold 10, and the preform molding portions are filled from the lower ends thereof with the molten resin. After that, mold opening is done by lifting the core mold 11 and upwardly moving the lip mold 7 supporting the mouth portions of the preforms, thereby upwardly releasing the preforms from the cavity mold 10. The preforms are then conveyed to the subsequent stretch blow molding section 5 by the lip mold 7.

The injection molding mold 4 used for the injection molding of preforms is a multi-cavity mold. In the hot runner apparatus 9, over which the injection molding mold 4 is disposed, hot runner nozzles 13 corresponding to the number of the preform molding portions are vertically provided on a hot runner block 14.

In the typical hot runner apparatus 9 used in combination with a multi-cavity mold, a runner (i.e., a pipe line through which the molten resin passes) is branched into a plurality of sections as shown in Patent Literature 2, for example. In the above-discussed injection stretch blow molding machine 1, the hot runner apparatus 9 into which the molten resin is horizontally fed from the injection apparatus 2 includes: the above-described plurality of hot runner nozzles 13; a horizontal runner portion 15 disposed below the hot runner nozzles 13 along a row direction of the hot runner nozzles 13; vertical runner portions 16 upwardly extending from the horizontal runner portion 15 so as to be continuous with the hot runner nozzles 13; and an introducing runner portion 18 disposed horizontally from an introducing port 17 so as to be continuous with the horizontal runner portion 15 as shown in FIGS. 4 and 5.

The horizontal runner portion 15, the vertical runner portions 16, and the introducing runner portion 18 are formed in the above-described hot runner block 14. The introducing port 17 of the introducing runner portion 18 is an opening of a main nozzle 19 on the side of the injection apparatus 2, against which an injection nozzle of the injection apparatus 2 is allowed to abut. In the introducing runner portion 18, the molten resin fed from the injection apparatus 2 having an injection direction in a horizontal direction is guided toward the horizontal runner portion 15 by the main nozzle 19 while keeping the horizontal injection direction. The molten resin having entered the horizontal runner portion 15 moves to the vertical runner portions 16. The vertical runner portions 16 further guide the molten resin to the hot runner nozzles 13 each having an upward injection direction.

As discussed above, the molten resin is horizontally fed to the hot runner apparatus 9 by the injection apparatus 2 in the injection stretch blow molding machine 1. In the hot runner apparatus 9, the molten resin branches and the flow of the molten resin is changed to a vertically upward direction. The molten resin injected by the hot runner apparatus 9 is injected into the respective preform molding portions of the injection molding mold 4. A plurality of preforms with their mouth portions positioned on an upper side thereof are thus molded while the preform height direction corresponds to the vertical direction. After that, the preforms are released by carrying out the mold opening in the injection molding section 3 as discussed above. The preforms are then conveyed to the subsequent stretch blow molding section 5.

### Runner in Hot Runner Apparatus:

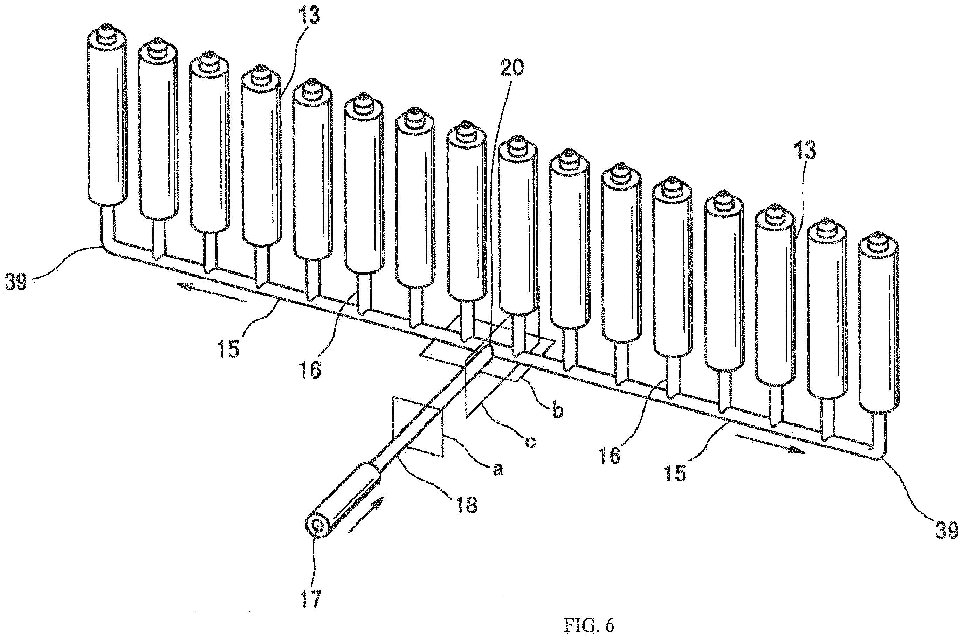

FIG. 6 schematically shows the runner extending from the introducing port 17 to the hot runner nozzles 13 in the above-described hot runner apparatus 9 used to obtain a plurality of preforms simultaneously.

The horizontally-disposed single introducing runner portion 18 as shown in the figure is continuous with a central portion of the horizontal runner portion 15 disposed along the array direction of the hot runner nozzles 13 so as to make a right angle to the length direction of the horizontal runner portion 15. The portion at which the introducing runner portion 18 is continuous with the horizontal runner portion 15 is configured as a T-shaped branching pipe line 20. Taking the central portion of the horizontal runner portion 15 as a center position, each half of the horizontal runner portion 15 separated from the center position is branched into the vertical runner portions 16 toward the vertically upward direction.

### Molten Resin in Introducing Runner Portion:

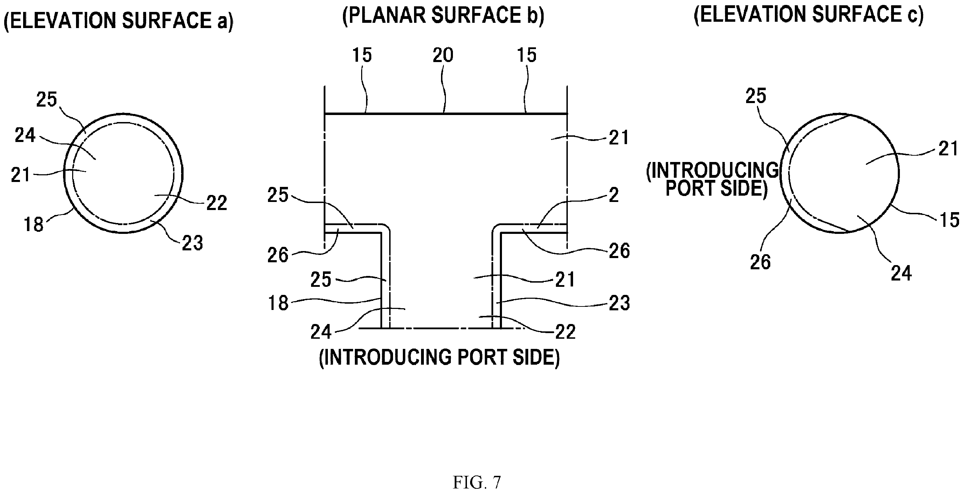

Although not limited to a molten resin 21 moving through the above-described introducing runner portion 18, the molten resin 21 has the following characteristics as described also in Patent Literature 2 (from the lower right column on page 2 to the upper left column on page 3), for example: a resin in an outer peripheral ring-shaped region 23 slidably in contact with a pipe wall of the introducing runner portion 18 has a higher temperature due to shear heat generation and thus has a lower viscosity as compared to a resin in a central region 22 of the molten resin 21. The molten resin 21 moves through the introducing runner portion 18 with a lower temperature and higher viscosity resin 24 in the central region 22 being surrounded by a higher temperature and lower viscosity resin25 in the ring-shaped region 23 , and reaches the above-described branching pipe line 20 (see FIG. 7 (elevation surface a)).

### Molten Resin in Horizontal Runner Portion:

Subsequently, the molten resin 21 is divided into two portions by the above-described branching pipe line 20. The divided molten resin portions move in directions opposite to each other along the length direction of the horizontal runner portion 15 from the position of the branching pipe line 20. When the molten resin 21 branches at the branching pipe line 20 as shown in FIG. 7, the lower temperature and higher viscosity resin 24 is divided in the length direction of the horizontal runner portion 15, and the divided lower temperature and higher viscosity resin portions move in the directions opposite to each other. Similarly, the higher temperature and lower viscosity resin 25 in the ring-shaped region 23 is also divided into two. These divided portions form two arc-like regions 26, and move in the directions opposite to each other along the length direction of the horizontal runner portion 15 (see FIG. 7 (planar surface b)).

In each of the pipe lines closer to the position of the branching pipe line 20 of the horizontal runner portion 15, the higher temperature and lower viscosity resin 25 in the arc-like region 26 is located on the side closer to the introducing port 17 of the hot runner block 14 and the remaining region is occupied by the lower temperature and higher viscosity resin 24. The lower temperature and higher viscosity resin 24 and the higher temperature and lower viscosity resin 25 both start to move in the length direction of the horizontal runner portion 15 from the position of the branching pipe line 20. The higher temperature and lower viscosity resin 25 in the above-described arc-like region 26, however, moves in the length direction of the horizontal runner portion 15 in each half of the horizontal runner portion 15 with the higher temperature and lower viscosity resin 25 being located on the side closer to the introducing part 17 of the hot runner block 14 as discussed above (see FIGS. 6 and 7 (elevation surface c)).

As with the molten resin 21 moving through the introducing runner portion 18, the molten resin 21 moving in the length direction of the horizontal runner portion 15 causes shear heat generation in the resin present along the pipe wall of the horizontal runner portion 15. In addition to this, since the higher temperature and lower viscosity resin 25 in the arc-like region 26 moves along the side of the horizontal runner portion 15 closer to the introducing port 17 of the hot runner block 14 as discussed above, the region occupied by the higher temperature and lower viscosity resin 25 on the side of the horizontal runner portion 15 closer to the introducing port 17 of the hot runner block 14 becomes wider in the cross-sectional direction of the pipe line.

### Molten Resin in Vertical Runner Portion:

The molten resin 21 laterally moving through the horizontal runner portion 15 is partially separated and moves upwardly into the vertical runner portions 16 branching from intermediate positions of the horizontal runner portion 15. The molten resin 21 laterally moving through the horizontal runner portion 15 also moves upwardly into the vertical runner portions 16 continuously rising from end positions of the horizontal runner portion 15.

The flow of the molten resin 21 is changed to the upward direction from the horizontal runner portion 15 to the vertical runner portions 16. Thus, in the molten resin 21 moving through the vertical runner portion 16, a region occupied by the higher temperature and lower viscosity resin 25 on the side closer to the introducing port 17 of the hot runner block 14 becomes wider in the cross-sectional direction of the pipe line as with the case of the horizontal runner portion 15.

### Molten Resin in Preform Molding Portions:

The molten resin 21 moving through the vertical runner portion 16 and reaching the hot runner nozzle 13 is injected from the hot runner nozzle 13 and filled into the preform molding portion of the injection molding mold 4.

When the molten resin 21 is filled into each of the preform molding portions of the injection molding mold 4, a distribution (in a horizontal cross-sectional direction) between the lower temperature and higher viscosity resin 24 and the higher temperature and lower viscosity resin 25 in the molding portion is affected by the above-described distribution in the molten resin 21 moving through the vertical runner portion 16.

Thus, the preform molding portion filled with the molten resin 21 has a distribution in which the higher temperature and lower viscosity resin 25 is located in a biased manner in a part corresponding to the side closer to the introducing port 17 of the hot runner block 14.

In the conventional injection stretch blow molding machine, a preform is released only after the preform is cooled down in the injection molding section so as to lower the temperature of the preform. The preform is then conveyed to the subsequent stretch blow molding section to undergo stretching and blowing. Thus, even when unevenness in temperature distribution occurs due to the above-discussed biased higher temperature and lower viscosity resin upon filling the above-described molten resin into the preform molding portion, such unevenness in temperature distribution is diminished, if not eliminated, by prolonging cooling time during the injection molding step.

### Citation List

### Patent Literature

Patent Literature 1: Japanese Patent Application Laid-Open No. Hei. 03-142220
Patent Literature 2: Japanese Patent Application Laid-Open No. Sho. 63-239022

### Summary of Invention

### Technical Problem

In recent injection stretch blow molding machines, attempts to shorten a molding cycle have been made by conveying preforms to a stretch blow molding section earlier than in the conventional techniques by advancing timing for releasing the preform in an injection molding section, and stabilizing the shapes of hollow molded bodies while cooling the hollow molded bodies in a stretching and blowing step for the purpose of improving production efficiency.

According to the above discussed attempts to shorten a molding cycle, however, since the timing for releasing preforms is advanced as compared to the conventional techniques, cooling time is reduced, and thus a higher temperature and lower viscosity portion is present in a biased manner in the released preforms. The preforms are then stretched and blown in the stretch blow molding step while being cooled so as to mold hollow molded bodies. A problem, however, arises in that a degree of unevenness in the thickness of the body portions of the blown hollow molded bodies becomes large in the circumferential direction.

In particular, a problem arises in that a difference between the thickness of a portion in a lower part of the body portion of the hollow molded body corresponding to the above-described side closer to the introducing part 17 of the hot runner block 14 when in the form of the preform and the thickness of a radially opposed portion in the lower part of the body portion becomes large.

Moreover, a problem arises in that the thickness itself of the above-described portion in the lower part of the body portion of the hollow molded body corresponding to the side closer to the introducing port 17 of the hot runner block 14 becomes thin without satisfying a predetermined thickness. In addition, if such unevenness in thickness generated in the circumferential direction becomes large in a particular radial direction in the hollow molded body, it becomes extremely difficult, or impossible, to resolve such a problem via shape correction with a core mold.

In the above-described injection stretch blowmolding machine, a plurality of hollow molded bodies are produced for each cycle by releasing a plurality of preforms arranged in a row from the multi-cavity injection molding mold at a time and by simultaneously stretching and blowing the plurality of preforms in the stretch blow molding section. A problem, however, further arises in that the degrees of unevenness in the thicknesses of the body portions of the hollow molded bodies in their circumferential direction are not uniform, and vary greatly, in the molding row direction of the hollow molded bodies.

In view of the foregoing circumstances, the aim of the present invention is to enable a molten resin to be fed from a hot runner apparatus into the preform molding portions of the injection molding mold in the above-described injection stretch blow molding machine without a higher temperature and lower viscosity resin being present in a biased manner in its circumferential direction. It is an object of the present invention to enable preforms having no biased portion of a higher temperature and lower viscosity resin in their circumferential direction to be injection-molded and thus enable timing for releasing the preforms to be advanced so as to start molding of hollow molded bodies earlier.

### Solution to Problem

The present invention has been made in light of the above-described problem. The above-described problem is solved by an injection stretch blow molding machine according to independent claim 1. Furthermore, a method for branching a molten resin in the hot runner apparatus in such an injection blow molding machine is provided in claim 6. The dependent claims relate to advantageous embodiments.

In the above-described invention, the injection molding mold may preferably be a molding mold for molding preforms with their mouth portions positioned on an upper side thereof by being injected and filled with a molten resin upwardly fed by the hot runner nozzles . Advantageous Effects of Invention

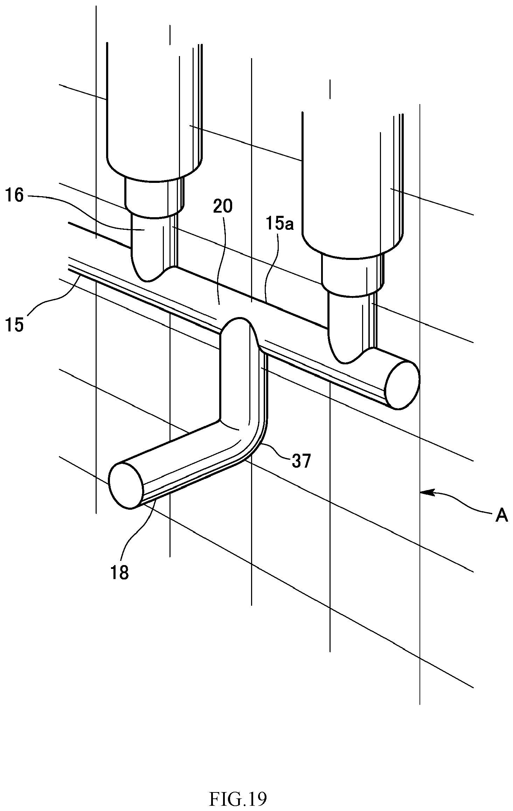

According to the present invention, the introducing runner portion (18) of the hot runner apparatus is bent toward the horizontal runner portion (15) after reaching the elevation plane (A: a virtual elevation plane) passing through the position of the horizontal runner portion (15) in the up-and-down direction as shown in FIG. 19. The introducing runner portion (18) further extends from the bent portion toward the intermediate portion (15a) of the horizontal runner portion (15) in the above-described elevation plane (A) so as to be continuous with the intermediate portion (15a) in the elevation plane (A).

According to the present invention, when the molten resin fed into the hot runner apparatus by being horizontally injected by the injection apparatus moves into the horizontal runner portion, the moving direction of the higher temperature and lower viscosity resin branched by the movement into the horizontal runner portion is biased toward the length direction of the horizontal runner portion along the pipe wall of the upper part or lower part of the horizontal runner portion.

Due to such bias, the molten resin moves through the horizontal runner portion with the higher temperature and lower viscosity resin moving along the pipe wall of the upper part or the pipe wall of the lower part of the horizontal runner portion, and the molten resin moving through the horizontal runner portion is fed into the vertical runner portions.

When a molten resin moves with a higher temperature and lower viscosity resin moving along the pipe wall of the lower part of the horizontal runner portion, for example, a higher temperature and lower viscosity resin is generated in a ring-shaped region in the outer peripheral portion of the molten resin having higher temperature along the pipe wall of the lower part (since the portion originally corresponds to the portion of the above-described branched higher temperature resin) as the molten resin moves . Since the molten resin having such a state is branched and fed into the vertical runner portion, no temperature unevenness is generated in the circumferential direction of the horizontal cross-section for the molten resin passing through the vertical runner portion.

When a molten resin in which a higher temperature and lower viscosity resin is distributed along the pipe wall of the upper part of the horizontal runner portion moves, a higher temperature and lower viscosity resin is generated in a ring-shaped region in the outer peripheral portion of the molten resin having higher temperature along the pipe wall of the upper part (since the portion originally corresponds to the portion of the above-described branched higher temperature resin) as the molten resin moves . Since the molten resin having such a state is branched and fed into the vertical runner portion, no temperature unevenness is generated in the circumferential direction of the horizontal cross-section for the molten resin passing through the vertical runner portion.

In both cases when the molten resin moves with the higher temperature and lower viscosity resin moving along the pipe wall of the lower part of the horizontal runner portion and when the molten resin moves with the higher temperature and lower viscosity resin moving along the pipe wall of the upper part of the horizontal runner portion, a biased degree of the higher temperature and lower viscosity resin is diminished in the direction of the horizontal cross-section of the pipe line of the vertical runner portion. Thus, the molten resin having such a state maintained is fed into the hot runner nozzle. The molten resin is injected from the hot runner nozzle into the preform molding portion of the injection molding mold located thereabove through the gate. The molten resin is filled into the preform molding portion without the higher temperature and lower viscosity resin being significantly biased in the direction of the horizontal cross-section.

Furthermore, since a preform is injection-molded without the higher temperature and lower viscosity resin being significantly biased circumferentially in the horizontal cross-sectional direction, the preform has no temperature unevenness. Therefore, even when a hollow molded body is blow molded after advancing timing for releasing the preform, no significant unevenness in thickness is generated in the circumferential direction of the hollow molded body.

### Brief Description of Drawings

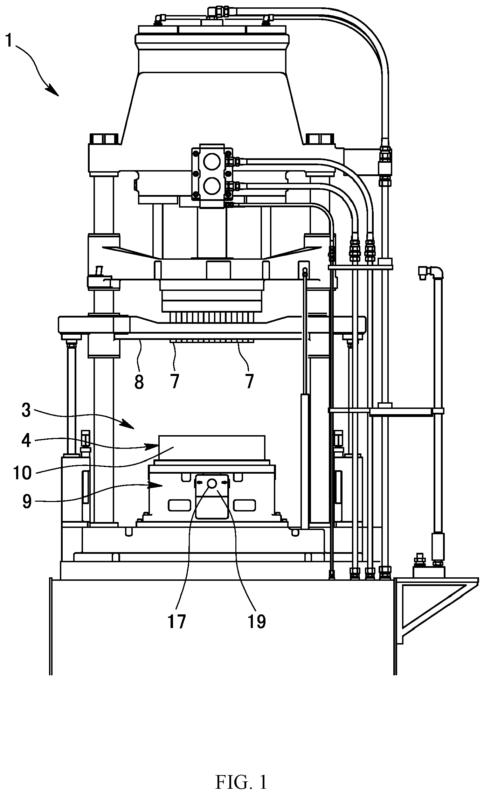

FIG. 1 is an explanatory diagram illustrating an example of an injection stretch blow molding machine as viewed from the side of an injection molding section.
FIG. 2 is an explanatory diagram schematically illustrating an arrangement of the injection molding section, a stretch blow molding section, and an ejecting section.
FIG. 3 is an explanatory diagram illustrating an injection apparatus of the injection stretch blow molding machine.
FIG. 4 is an explanatory diagram illustrating a cross-section of a conventional hot runner apparatus in a direction along an injection direction of the injection apparatus.
FIG. 5 is an explanatory diagram illustrating a cross-section of the conventional hot runner apparatus in a direction along a horizontal runner portion of the injection apparatus.
FIG. 6 is an explanatory diagram schematically illustrating a runner in the conventional hot runner apparatus.
FIG. 7 is an explanatory diagram schematically illustrating resin distributions in the runner of FIG. 6 on an elevation surface a, a planar surface b, and an elevation surface c.
FIG. 8 is an explanatory diagram illustrating a cross-section of a hot runner apparatus for use in an embodiment of the present invention in a direction along an injection direction of an injection apparatus.
FIG. 9 is an explanatory diagram illustrating a cross-section of the hot runner apparatus for use in an embodiment of the present invention in a direction along a horizontal runner portion of the injection apparatus.
FIG. 10 is an explanatory diagram schematically illustrating a runner in a hot runner apparatus according to a first example of the present invention.
FIG. 11 is an explanatory diagram schematically illustrating resin distributions in the runner of FIG. 10 on an elevation surface d and an elevation surface e.
FIG. 12 is an explanatory diagram schematically illustrating a runner in a hot runner apparatus according to a second example.
FIG. 13 is an explanatory diagram schematically illustrating a resin distribution in the runner of FIG. 12 on an elevation surface f.
FIG. 14 is an explanatory diagram showing, in a table, values of thicknesses of body portions of PET bottles according to a comparative example.
FIG. 15 is an explanatory diagram showing, in a table, values of thicknesses of body portions of PET bottles according to an example.
FIG. 16 shows positions at which thicknesses of a PET bottle are measured: (A) is an explanatory diagram showing measurement positions in a circumferential direction on a cross-section of a body portion; and (B) is an explanatory diagram showing measurement positions in a height direction.
FIG. 17 shows a runner in a hot runner apparatus according to a third example: (a) is an explanatory diagram schematically illustrating a horizontal runner portion as viewed from the side of a main nozzle; and (b) is an explanatory diagram schematically illustrating the portion of a branching pipe line.
FIG. 18 shows a runner in a hot runner apparatus according to a fourth example: (a) is an explanatory diagram schematically illustrating a horizontal runner portion as viewed from the side of a main nozzle; and (b) is an explanatory diagram schematically illustrating the portion of a branching pipe line.
FIG. 19 is an explanatory diagram showing a virtual elevation plane including the position of the horizontal runner portion of the hot runner apparatus and how an introducing runner portion extends toward the horizontal runner portion in the elevation plane so as to be continuous with the horizontal runner portion.

### Description of Embodiments

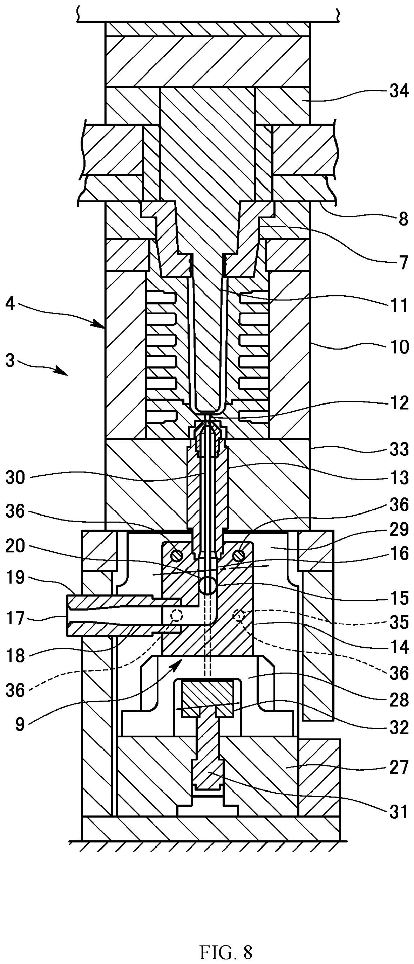

The present invention will be described next in detail with reference to embodiments shown in FIGS. 8 to 19. Note that elements overlapping with those in the conventional example shown in FIGS. 4 to 7 will be denoted by the same reference numerals and the description thereof will be omitted.

### First Example - Hot Runner Apparatus:

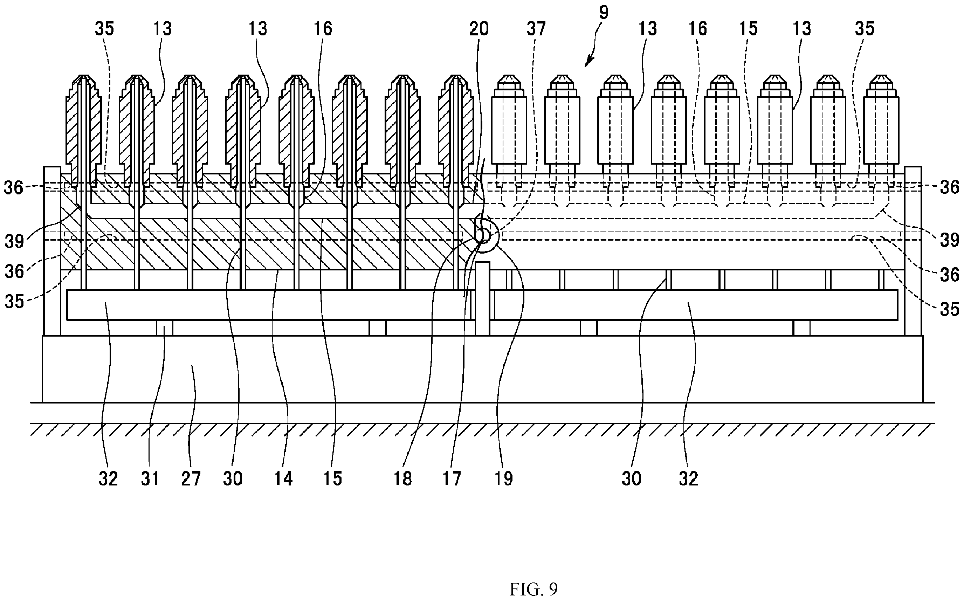

FIGS. 8 and 9 illustrate a hot runner apparatus 9 over which an injection molding mold 4 in an injection molding section 3 of an injection stretch blow molding machine 1 according to the present invention is disposed. In the hot runner apparatus 9, sixteen hot runner nozzles 13 having a vertically upward injection direction are vertically provided on an upper part of a hot runner block 14.

In the figure, the reference numeral "27" denotes a hot runner fixing plate, and the reference numerals "28" and "29" denote hot runner pressure receiving plates disposed above the hot runner fixing plate 27 for supporting the hot runner block 14.

A shutoff pin 30 for opening and closing a nozzle orifice of the hot runner nozzle 13 is disposed in a resin passage portion inside the hot runner nozzle 13 so as to pass through the hot runner block 14 in the up-and-down direction from a height position corresponding to a lower side of the hot runner pressure receiving plate 28. At the height position corresponding to the lower side of the hot runner pressure receiving plate 28, a pin fixing plate 32 supported by a shutoff piston 31 is disposed. The pin fixing plate 32 moves in the up-and-down directions by motions of the shutoff piston 31. Note that the hot runner pressure receiving plate 28 is disposed so as not to interfere with the shutoff pin 30.

The lower end of the shutoff pin 30 is supported by the pin fixing plate 32. The shutoff pin 30 moves in the up-and-down directions by motions of the shutoff piston 31. The nozzle orifice is opened and closed by the up and down movements of the shutoff pin 30.

### Basic Configuration of Injection Molding Mold:

FIG. 8 described above also illustrates the injection molding mold 4 attached to an upper part of the hot runner apparatus 9. The injection molding mold 4 shown in the figure is in a mold-closed state. A cavity mold 10 of the injection molding mold 4 is fixed to the hot runner apparatus 9 via a cavity fixing plate 33 . A rotary plate 8 is at a descent position during the mold closing as discussed above so that a lip mold 7 supported by the rotary plate 8 is overlaid on the cavity mold 10.

A core mold 11 supported by an injection core fixing plate 34 is also at a descent position so that a preform inner surface forming part of the core mold 11 is located inside of the lip mold 7 and the cavity mold 10. A gate 12 at the lower end of the cavity mold 10 is opposed to the nozzle orifice of the above-described hot runner nozzle 13, and a molten resin injected upwardly from the hot runner nozzle 13 is filled into a preform molding portion in a direction from its lower side toward its upper side via the gate 12.

### Hot Runner Block:

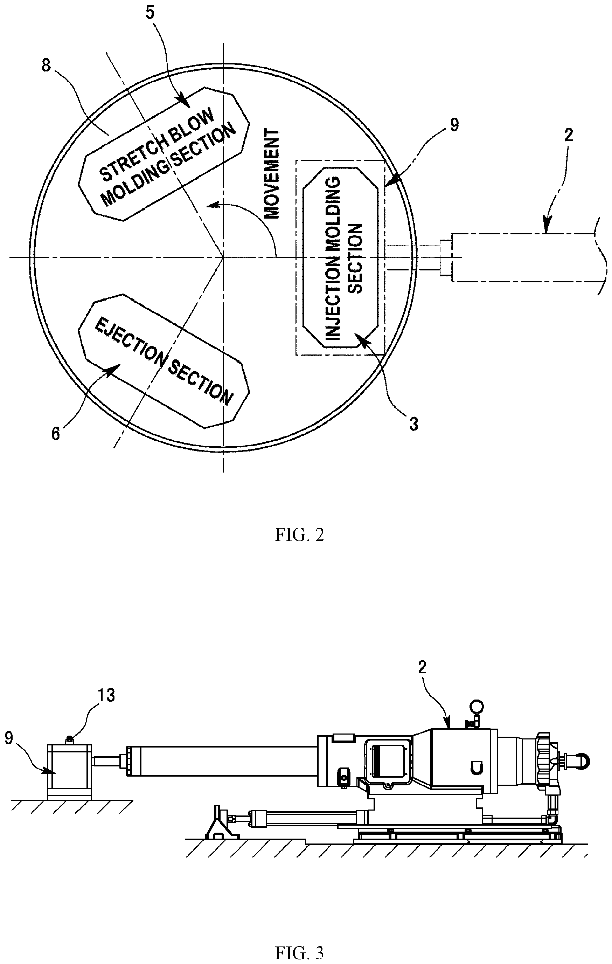

In the injection stretch blow molding machine 1 of the present embodiment, the center of the injection molding section 3 is located on a radial direction of the rotary plate passing through the center of the injection stretch blow molding machine 1 (the arrangement center among the injection molding section 3, a stretch blow molding section 5, and an ejecting section 6) (see FIG. 2).

In the injection molding section 3, the length direction of the injection molding mold 4 in which preform molding portions are arranged in a row as a 16-cavity mold and the length direction of the above-described hot runner apparatus 9 in which the 16 hot runner nozzles 13 are arranged in a row are set so as to be perpendicular to the above-described radial direction of the rotary plate. The injection direction of an injection apparatus 2 coincides with the above-described radial direction of the rotary plate in the injection stretch blow molding machine 1 passing through the center of the hot runner apparatus 9. An injection nozzle of the injection apparatus 2 is connected to an introducing port 17 located at the center of the hot runner block 14 in its length direction.

The introducing port 17 of the hot runner block 14 is an opening against which the nozzle of the injection apparatus 2 is allowed to abut as with the above-discussed conventional example. The hot runner block 14 includes: a horizontal runner portion 15 disposed below the hot runner nozzles 13 along the row direction of the hot runner nozzles 13 (the length direction of the hot runner block 14); sixteen vertical runner portions 16 extending upwardly from the horizontal runner portion 15 so as to be continuous with the hot runner nozzles 13; and an introducing runner portion 18, including a passage of a main nozzle 19, for guiding the molten resin from the introducing port 17 toward the horizontal runner portion 15.

The above-described shutoff pin 30 of the hot runner apparatus 9 completely passes through a pipe line of the horizontal runner portion 15 in the vertical direction (the up-and-down direction) and passes through the center of a pipe line of the vertical runner portion 16 rising from the horizontal runner portion 15 in the vertical direction so as to be disposed in a passage inside the hot runner nozzle 13 (nozzle-axis center) (see FIGS. 8 and 9).

### Rod Heater:

In the present embodiment, the hot runner block 14 has a rectangular transverse cross-sectional shape. As shown in the transverse cross-section, the hot runner block 14 is pierced along the length direction of the horizontal runner portion 15 so as to provide insertion holes 35 at a total of four positions : two positions above the horizontal runner portion 15 provided on the side where the introducing port 17 is provided and on its opposite side, and two positions below the horizontal runner portion 15 provided on the side where the introducing port 17 is provided and on its opposite side. Bar heaters 36 are inserted into the insertion holes 35.

In this hot runner apparatus 9, the bar heater 36 is disposed along the length direction of the horizontal runner portion 15. Furthermore, the bar heaters 36 are disposed at an equal distance from the horizontal runner portion 15. The hot runner block 14 is heated by these bar heaters 36, and the molten resin moving through such a hot runner block 14 is heated by the hot runner block 14 having an increased temperature.

The present invention is not limited to the shape of the hot runner block 14 shown in the embodiment. For example, its transverse cross-sectional shape may be circular as illustrated in FIG. 4 for the description of the conventional technique. Note that a hot runner apparatus having a hot runner block with a circular transverse cross-section can employ a cover-like heater externally surrounding the hot runner block.

### Bent Portion of Introducing Runner Portion:

In the introducing runner portion 18, the direction of the passage of the main nozzle 19 (passage for the molten resin injected by the injection apparatus), which is a part of the introducing runner portion 18, is set to a direction perpendicular to the length direction of the horizontal runner portion 15. A pipe line from the introducing port 17 to the horizontal runner portion 15 extends to a position below the horizontal runner portion 15.

As shown also in FIG. 19, the pipe line of the introducing runner portion 18 reaches the position below the horizontal runner portion 15 corresponding to a portion of a virtual elevation plane A passing through the position of the horizontal runner portion 15 in the up-and-down direction along the horizontal runner portion 15. The pipe line of the introducing runner portion 18 further bends upwardly toward the horizontal runner portion 15 in an L shape after reaching the portion below the horizontal runner portion 15, i.e. , the above-described elevation plane A. The pipe line extends upwardly from a bent portion 37, which is the bent portion of the pipe line, so as to be continuous with a lower part of an intermediate portion 15a of the horizontal runner portion 15 in the elevation plane A. As discussed above, a T-shaped branching pipe line 20 is provided in a connection portion between the upwardly-bent pipe line of the introducing runner portion 18 and the pipe line of the horizontal runner portion 15.

### Horizontal Runner Portion and Vertical Runner Portion:

The above-described branching pipe line 20 is placed in the intermediate portion 15a of the horizontal runner portion 15 corresponding to a central portion of the horizontal runner portion 15 in its length direction. Eight vertical runner portions 16 extend upwardly from, and are continuous with, each half of the horizontal runner portion 15 extending from the branching pipe line 20.

### Branching of Molten Resin from Introducing Runner Portion:

The molten resin horizontally injected by the injection apparatus 2 is fed into the introducing runner portion 18 through the main nozzle 19. When the molten resin moves through the introducing runner portion 18, a higher temperature and lower viscosity resin 25 is generated in a ring-shaped region 23 corresponding to an outer peripheral portion of the molten resin 21 due to shear heat generation as discussed above. The molten resin 21 in which the portion of a central region 22 where a lower temperature and higher viscosity resin 24 is distributed is surrounded by the higher temperature and lower viscosity resin 25 in the ring-shaped region 23 moves toward the horizontal runner portion 15 and reaches the branching pipe line 20.

Note that the higher temperature and lower viscosity resin 25 and the lower temperature and higher viscosity resin 24 together constitute the molten resin 21 moving through the pipe line. The terms "higher" and "lower" are expressed by contrasting the temperature of resin with the viscosity of the resin. The higher temperature and lower viscosity resin and the lower temperature and higher viscosity resin are not defined on the basis of a particular temperature and a particular viscosity.

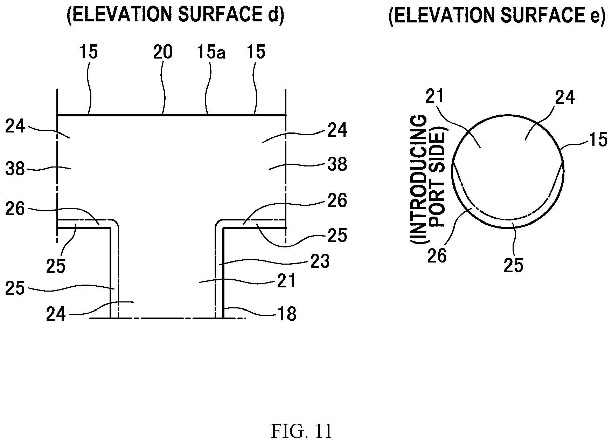

The molten resin 21 is divided when the molten resin 21 reaches the branching pipe line 20 and moves in the length direction of the horizontal runner portion 15. The divided molten resin portions move through the respective halves of the horizontal runner portion 15 so as to move away from each other along the length direction of the horizontal runner portion 15. The branching pipe line 20 causes the portion used to be the central region 22 comprising the lower temperature and higher viscosity resin 24 in the introducing runner portion 18 to branch into two regions 38 and also causes the higher temperature and lower viscosity resin 25 in the above-describedring-shapedregion23 to branch into two. As aresult of such branching, two arc-like regions 26 are formed, and the above-described higher temperature and lower viscosity resin 25 is located in these regions (FIG. 11 (elevation surface d)).

The branching pipe line bends the moving direction of the higher temperature and lower viscosity resin 25 that forms the arc-like region 26 so as to go along a pipe wall of the horizontal runner portion 15 with which the introducing runner portion 18 is continuous , i.e. , the pipe wall of a lower part of each half of the horizontal runner portion 15, and thus causes the moving direction to be biased toward the length direction of the pipe wall of such a lower part. In the molten resin 21 immediately after having passed through the branching pipe line 20, the higher temperature and lower viscosity resin 25 is distributed along the pipe wall of the lower part of each half of the horizontal runner portion 15 as the arc-like region 26, and the lower temperature and higher viscosity resin 24 (resin constituting the region 38) is distributed over the remaining region (FIG. 11 (elevation surface e)).

### Molten Resin in Horizontal Runner Portion:

When getting to each position of the vertical runner portions 16 provided at intermediate positions, the molten resin 21 moving through each half of the horizontal runner portion 15 in its length direction is branched and fed into the vertical runner portion 16. The molten resin 21 is also fed into the vertical runner portion 16 extending upwardly from an end of each half of the horizontal runner portion 15.

### Molten Resin in Vertical Runner Portions:

As the molten resin 21 moves through the half of the horizontal runner portion 15 in its length direction, the ring-shaped region 23 in which the higher temperature and lower viscosity resin 25 is distributed develops in the outer peripheral portion of the molten resin 21 whose lower part has a higher temperature (the temperature of the lower part becomes high since the above-described higher temperature and lower viscosity resin 25 is located along the pipe wall of the lower part of the horizontal runner portion 15). It is believed that for each shot, a part of the molten resin 21 is separated from the laterally moving molten resin 21 and fed into the vertical runner portion 16 while keeping a vertically stacked form in which an upper part thereof is occupied by the lower temperature and higher viscosity resin 24 and the higher temperature and lower viscosity resin 25 is located in a lower part thereof as shown in the above-described elevation surface e. It is also believed that the molten resin 21 passing a branch position without branching moves through the horizontal runner portion 15 also with the distribution shown on the elevation surface e (such resin movement is deduced from comparison results to be described later).

Furthermore, in the vertical runner portion 16 rising from the intermediate portion in each half of the horizontal runner portion 15, also when the molten resin 21 is fed into an upper part of such a vertical runner portion 16, the ring-shaped region 23 comprising the higher temperature and lower viscosity resin 25 is generated slightly in the outer peripheral portion of the molten resin 21. Since the length of the passage is short, the higher temperature and lower viscosity resin 25 can be prevented from being present in a significantly biased state in the outer peripheral portion in the cross-sectional direction of the pipe line of the vertical runner portion 16.

The pipe line of the vertical runner portion 16 disposed at an end of the horizontal runner portion 15 is extended upwardly via a bent portion 39 formed by bending the pipe line of the end of the horizontal runner portion 15 upwardly. As the molten resin 21 moves toward the end of the horizontal runner portion 15, a portion transformed into the higher temperature and lower viscosity resin 25 due to shear heat generation increases accordingly in the portion occupied by the lower temperature and higher viscosity resin 24 (in the cross-sectional direction of the pipe line) . As discussed above, the portion already occupied by the higher temperature and lower viscosity resin 25 has a small amount of shear heat generation due to its low viscosity. As a result, in the molten resin 21 having reached the end of the horizontal runner portion 15, the proportion of the occupying higher temperature and lower viscosity resin 25 is increased in the cross-sectional direction of the pipe line, and a biased degree of the higher temperature and lower viscosity resin 25 is diminished. It is believed that the molten resin 21 having such a state is fed into the vertical runner portion 16, and thus the higher temperature and lower viscosity resin 25 is not located in a significantly biased manner, or is scarcely present in a biased manner, in the cross-sectional direction of the pipe line also in the vertical runner portion 16. According to the comparison to be described later, uneven thickness is observed in a hollow molded body corresponding to the vertical runner portion at the end, but a degree of such uneven thickness is reduced as compared to the conventional techniques. Thus, it is believed that the higher temperature and lower viscosity resin 25 is not present in a significantly biased manner, or is scarcely present in a biased manner, in the cross-sectional direction of the pipe line in the vertical runner portion 16 disposed at the end as discussed above.

As just described, in each of the vertical runner portions 16 , the higher temperature and lower viscosity resin 25 is not present in a significantly biased manner in the cross-sectional direction of the pipe line. The molten resin 21 is injected and filled into the respective preform molding portions of the above-described injection molding mold 4 from the above-described vertical runner portions 16 via the hot runner nozzles 13.

### Preform Molding Portions of Injection Molding Mold:

The injection molding mold 4 is a molding mold for molding preforms with their mouth portions positioned on an upper side thereof . The molten resin 21 is injected into sixteen preform molding portions by corresponding hot runner nozzles 13, respectively. The molten resin 21 is injected and filled upwardly via the gate 12.

As discussed above, in each of the vertical runner portions 16, the higher temperature and lower viscosity resin 25 is scarcely present in a biased manner in the circumferential direction of the cross-section of the pipe line. Thus, the higher temperature and lower viscosity resin 25 is not located in a significantly biased manner in the circumferential direction of the horizontal cross-section of the preform molding portion. Therefore, a preform having no significant temperature unevenness in the circumferential direction can be molded in every preform molding portion. According to the comparison to be described later, temperature difference tends to increase in the circumferential direction in each of preforms corresponding to the positions of the vertical runner portions 16 at both ends, but such temperature difference can be regarded to fall within a range manageable on the part of the injection molding mold.

### Second Example - Hot Runner Apparatus:

In the first example, the pipe line of the introducing runner portion 18 is continuous (in the elevation plane A) with the pipe wall of the lower part of the central portion of the horizontal runner portion 15 after reaching the elevation plane A and bending upwardly in an L shape. The present invention, however, is not limited to the introducing runner portion 18 continuous with the lower part of the horizontal runner portion 15.

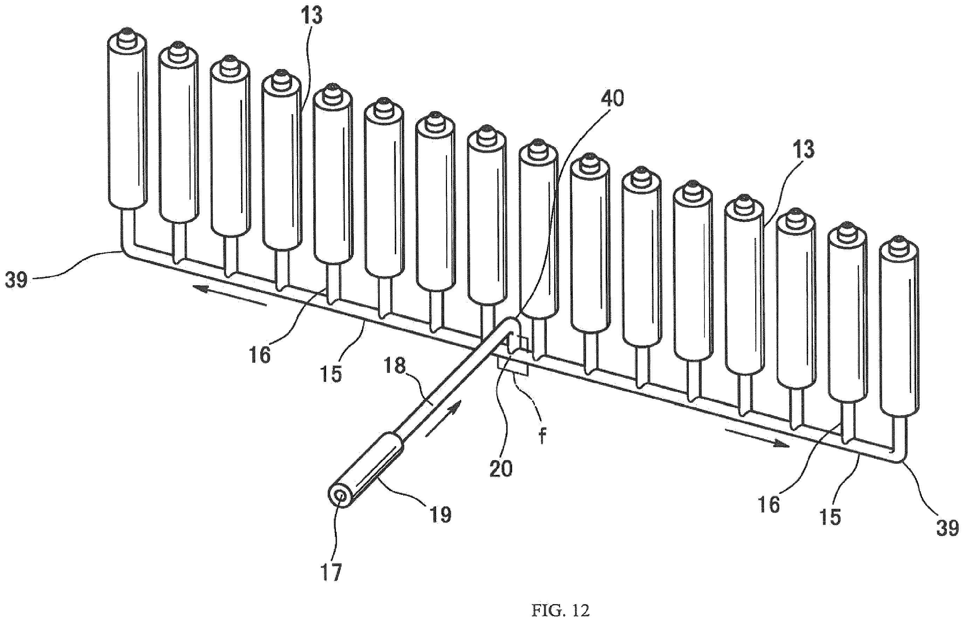

FIG. 12 shows a second example in which an introducing runner portion 18 is continuous with a central portion of a horizontal runner portion 15. The second example differs from the first example in that the introducing runner portion 18 is continuous with a pipe wall of an upper part of the horizontal runner portion 15 as will be described below. The other elements in the second example are the same as those in the first example.

In the second example, the direction of the introducing runner portion 18 is set so as to be perpendicular to the length direction of the horizontal runner portion 15 as with the first example. A pipe line of the introducing runner portion 18, into which a molten resin 21 is fed by an injection apparatus 2 injecting the resin in a horizontal direction, extends toward a position above the horizontal runner portion 15.

Furthermore, the pipe line of the introducing runner portion 18 reaches an elevation plane A, and then extends downwardly in the above-described elevation plane A from a bent portion 40 bent in an L shape at the position above the horizontal runner portion 15, so as to be continuous with the pipe wall of the upper part of the central portion of the horizontal runner portion 15. A T-shaped branching pipe line 20 is provided in a connection portion between the pipe line of the introducing runner portion 18 and a pipe line of the horizontal runner portion 15 as with the above-described first example.

### Branching of Molten Resin from Introducing Runner Portion:

The molten resin 21 horizontally injected by the injection apparatus 2 is fed into the introducing runner portion 18 through a main nozzle 19, and the molten resin 21 reaches the branching pipe line 20.

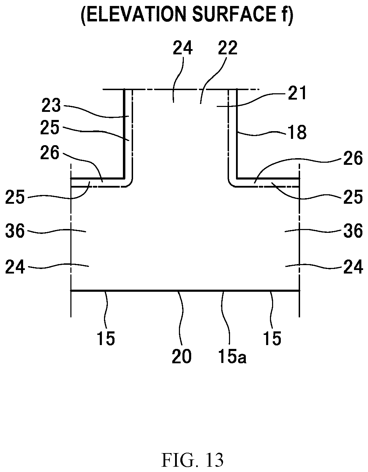

Upon reaching the branching pipe line 20, the molten resin 21 is divided when the molten resin 21 moves into the length direction of the horizontal runner portion 15. The divided molten resin portions move through respective halves of the horizontal runner portion 15 so as to move away from each other along the length direction of the horizontal runner portion 15. The branching pipe line 20 causes the portion used to be a central region 22 comprising a lower temperature and higher viscosity resin 24 in the introducing runner portion 18 to branch into two regions 38 and also causes a higher temperature and lower viscosity resin 25 in the above-described ring-shaped region 23 to branch into two. As a result of such branching, two arc-like regions 26 are formed, and the above-described higher temperature and lower viscosity resin 25 is located in these regions (FIG. 13 (elevation surface f)).

Furthermore, the branching pipe line 20 bends the moving direction of the higher temperature and lower viscosity resin 25 that forms the arc-like region 26 so as to go along the pipe wall of the upper part of each half of the horizontal runner portion 15, and thus causes the moving direction to be biased toward the length direction of the pipe wall of the upper part. In the molten resin 21 immediately after having passed through the branching pipe line 20, the higher temperature and lower viscosity resin 25 is located along the pipe wall of the upper part of each half of the horizontal runner portion 15 as the arc-like region 26, and the lower temperature and higher viscosity resin 24 (resin constituting the region 38) occupies the remaining region.

### Molten Resin in Horizontal Runner Portion:

When getting to each position of the vertical runner portions 16 provided at intermediate positions, the molten resin 21 moving through each half of the horizontal runner portion 15 is branched and fed into the vertical runner portion 16. The molten resin 21 is also fed into the vertical runner portion 16 extending upwardly from an end of each half of the horizontal runner portion 15.

### Molten Resin in Vertical Runner Portions:

In the second example, the moving direction of the higher temperature and lower viscosity resin 25 that forms the above-described arc-like region 26 is biased toward the length direction of the horizontal runner portion 15 along the pipe wall of the upper part of each half of the horizontal runner portion 15.

In the same manner as that discussed above, as the molten resin 21 moves through the half of the horizontal runner portion 15 in its length direction, the ring-shaped region 23 in which the higher temperature and lower viscosity resin 25 is located develops in the outer peripheral portion of the molten resin 21. It is believed that for each shot, a part of the molten resin 21 is separated from the laterally moving molten resin 21 and fed into the vertical runner portion 16 while keeping a vertically stacked form in which a lower part thereof is occupied by the lower temperature and higher viscosity resin 24 and the higher temperature and lower viscosity resin 25 is located in an upper part thereof (the vertically inverted form of the distribution shown on the elevation surface e) . It is also believed that the molten resin 21 passing a branch position without branching moves through the horizontal runner portion 15 while keeping the vertically stacked form in which the lower part thereof is occupied by the lower temperature and higher viscosity resin 24 and the higher temperature and lower viscosity resin 25 is located in the upper part thereof.

Furthermore, in the vertical runner portion 16 rising from the intermediate portion in each half of the horizontal runner portion 15, also when the molten resin 21 is fed into an upper part of such a vertical runner portion 16, the ring-shaped region 23 comprising the higher temperature and lower viscosity resin 25 is generated slightly in the outer peripheral portion of the molten resin 21. Since the length of the passage is short, the higher temperature and lower viscosity resin 25 can be prevented from being present in a significantly biased manner in the outer peripheral portion in the cross-sectional direction of the pipe line of the vertical runner portion 16.

As explained in the above-described first example, in the molten resin 21 having reached the end of the horizontal runner portion 15, the proportion of the occupying higher temperature and lower viscosity resin 25 is increased in the cross-sectional direction of the pipe line, and a biased degree of the higher temperature and lower viscosity resin 25 is diminished. It is believed that the molten resin 21 having such a state is fed into the vertical runner portion 16 at the end, and thus the higher temperature and lower viscosity resin 25 is not located in a significantly biased manner, or is scarcely present in a biased manner, in the cross-sectional direction of the pipe line also in the vertical runner portion 16.

### Preform Molding Portions of Injection Molding Mold:

As just described, also in each of the vertical runner portions 16 in the second example, the higher temperature and lower viscosity resin 25 is not present in a significantly biased manner in the cross-sectional direction of the pipe line. The molten resin 21 is injected and filled into respective preform molding portions of an injection molding mold 4 from the above-described vertical runner portions 16 via hot runner nozzles 13. Furthermore, the higher temperature and lower viscosity resin 25 is not located in a significantly biased manner in the circumferential direction of the horizontal cross-section of the preform molding portion as with the first example. Therefore, a preform having no significant temperature unevenness in the circumferential direction can be molded in every preform molding portion.

### Comparative Example and Example:

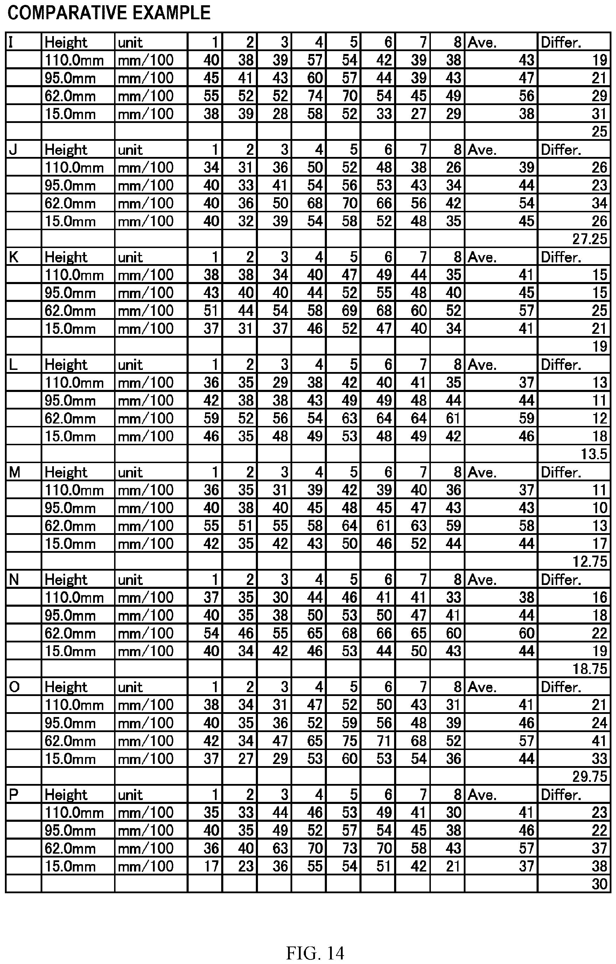

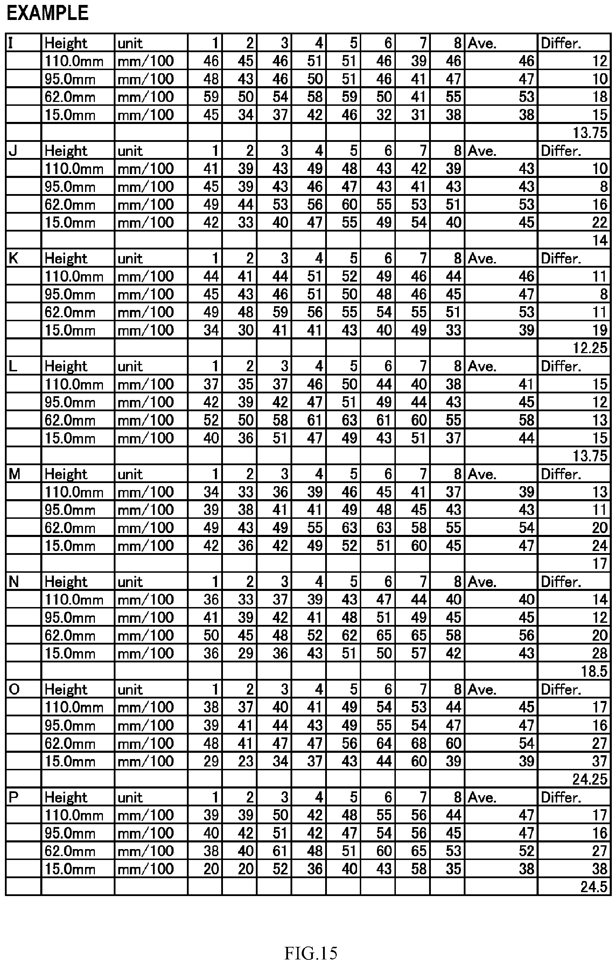

Values obtained by measuring thicknesses of body portions of PET bottles molded according to a conventional example are shown in a table of FIG. 14, and values obtained by measuring thicknesses of body portions of PET bottles molded according to an example are shown in a table of FIG. 15.

The conventional example employs a hot runner apparatus 9 in which an introducing runner portion 18 is continuous with a central portion of a horizontal runner portion 15 in its length direction from a traverse direction perpendicular to the horizontal runner portion 15 . The PET bottles were produced using an injection stretch blow molding machine 1 in which the hot runner apparatus 9 was disposed in an injection molding section 3.

The example employs a hot runner apparatus 9 in which a pipe line of an introducing runner portion 18 is bent in an L shape and the pipe line extending from the bent portion is continuous with a central portion of a horizontal runner portion 15 in its length direction from below so as to be perpendicular to the horizontal runner portion 15. The PET bottles were produced using an injection stretch blow molding machine 1 in which the hot runner apparatus 9 is disposed in an injection molding section 3.

An injection molding mold 4 used in the comparative example and the example is a molding mold for obtaining sixteen preforms arranged in a row.

### Used Resin Amount:

Used resin amounts for the PET bottles in the comparative example and the PET bottles in the example were each 24.0 g.

### Molding Procedure of PET Bottles:

In both of the comparative example and the example, the PET bottles were produced, using the three-station injection stretch blow molding machines, by: injecting a molten resin into preform molding portions of the injection molding mold; releasing the preforms early at a stage not impairing the shapes of the preforms and directly conveying the preforms to a stretch blow molding section from the injection molding section; and stretch-blow molding the preforms while being cooled.

### Measurement Positions for Thicknesses of PET Bottles:

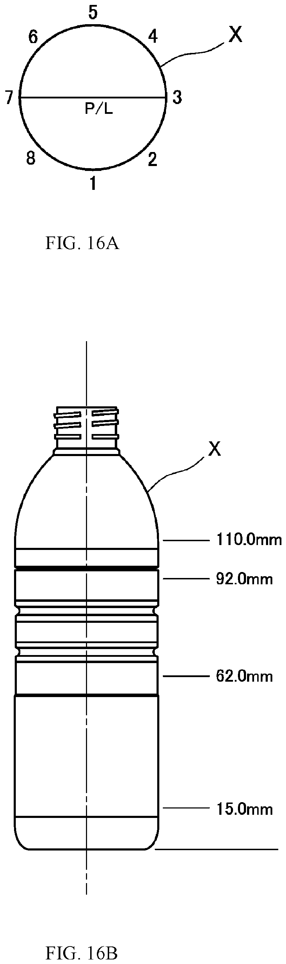

Thicknesses of a body portion X of a PET bottle produced as a hollow molded body were measured at eight positions in the circumferential direction thereof . Numbers 1 to 8 shown in the tables represent thickness measurement positions in the horizontal cross-section of the body portion. As shown in FIG. 16 (A), the number "1" corresponds to the side of an injection apparatus, and thicknesses are measured at an interval of 45 degrees in the circumferential direction. As shown in FIG. 16(B), thicknesses are also measured at four positions along the height direction of the body portion X of the PET bottle. A line at the center of the cross-section of the body portion in FIG. 16 (A) and a line at the center of the side surface of the container in FIG. 16 (B) both indicate a parting line position in a blow mold.

### Molding Positions of PET Bottles:

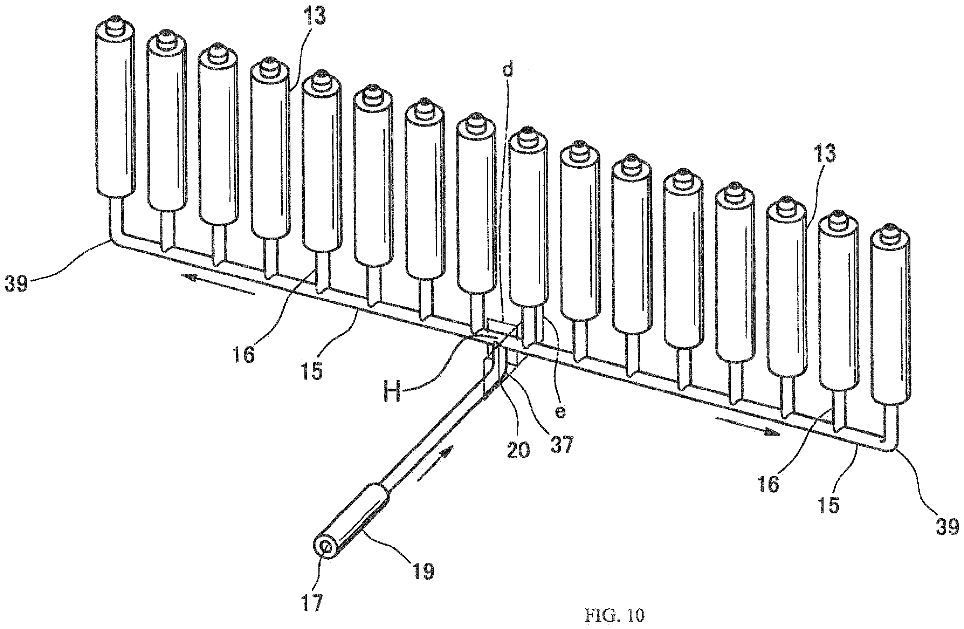

In the conventional example and the example, the measured PET bottles are those molded from preforms molded in eight preform molding portions corresponding to a half of the horizontal runner portion in the hot runner apparatus among the sixteen preform molding portions of the injection molding mold. A molding position corresponding to the side of the above-described branching pipe line in the hot runner apparatus is denoted by H (see Fig. 10) . Molding positions are denoted by I, ..., P so as to correspond to the arrangement order from the "H" of the preform molding portions of the injection molding mold.

The table entry title "Height" represents a height measured from the bottom of a PET bottle in its height direction, the table entry title "unit" represents a unit for a measured value, the table entry title "Ave. " represents an average value, and the table entry title "Differ." represents a difference between a maximum value and a minimum value. Furthermore, for each of the PET bottles, a numerical value in the last line under the above-described table entry title "Differ." represents an average "Differ." value of the four measured heights.

### For PET Bottles Molded According to Comparative Example:

On the basis of the table shown in FIG. 14, the PET bottles molded according to the comparative example are evaluated as follows .
(a) A degree of increase in temperature in a portion on the side closer to the injection apparatus when in the form of a preform is large.
(b) A temperature difference between the portion on the side closer to the injection apparatus and a portion on the side opposite to the injection apparatus when in the form of the preform is large.
(c) A difference (Differ.) between a maximum value and a minimum value among thicknesses of a body portion of a PET bottle at the eight positions in the circumferential direction thereof is generally large.
(d) An average value of differences (Differ.) between large values and small values at the four positions along the height direction of a PET bottle fluctuates in the PET bottle molding arrangement direction, and a degree of such fluctuation is large.

### For PET Bottles Molded According to Example:

On the basis of the table shown in FIG. 15, the PET bottles molded according to the example are evaluated as follows.
(a) A degree of increase in temperature in a portion on the side closer to the injection apparatus when in the form of a preform is extremely small.
(b) A temperature difference between the portion on the side closer to the injection apparatus and a portion on the side opposite to the injection apparatus when in the form of the preform is extremely small.
(c) A difference (Differ.) between a maximum value and a minimum value among thicknesses of a body portion of a PET bottle at the eight positions in the circumferential direction thereof is generally small. A degree of thickness unevenness is small in the circumferential direction of a body portion.
(d) An average value of differences (Differ.) between large values and small values at the four positions along the height direction of a PET bottle does not fluctuate in the PET bottle molding arrangement direction, and only exhibits a tendency to change in one direction toward an end (toward the position P) in the PET bottle molding arrangement direction.

In contrast with the comparative example, the above-described example employs the hot runner apparatus 9 in which the introducing runner portion 18 is continuous with the horizontal runner portion 15 from below in an elevation plane A. It is believed that the similar results can be obtained also by employing the hot runner apparatus 9 in the above-described second example since the introducing runner portion 18 is continuous with the horizontal runner portion 15 from above in the elevation plane A, and the molten resin 21 fed from the introducing runner portion 18 branches and the branched portions of the molten resin 21 move along the length direction of the horizontal runner portion 15 so as to move away from each other.

As a result of comparison between the thicknesses of the body portions of the PET bottles molded according to the comparative example and the thicknesses of the body portions of the PET bottles molded according to the example, it can be concluded that favorable PET bottles can be produced by molding PET bottles according to the example.

### Third Example:

The hot runner apparatuses exemplified in the first example and the second example are those manufactured for obtaining an even number of preforms . It has been described that the introducing runner portion is continuous with the central portion of the horizontal runner portion from below (the first example) or from above (the second example). The present invention, however, is not limited to the configurations shown in the first example and the second example. The present invention can be applied also to a hot runner apparatus in which an odd number of hot runner nozzles are vertically provided on a hot runner block.

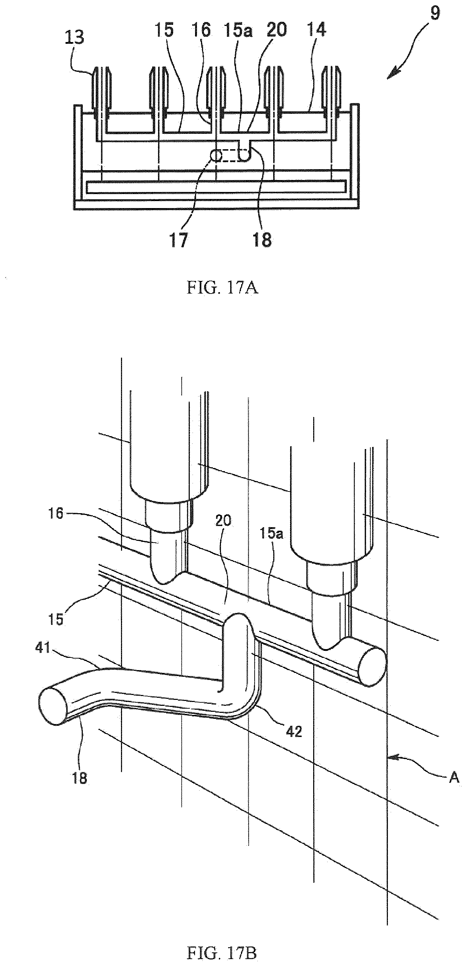

FIG. 17 illustrates a hot runner apparatus 9 including an odd number of hot runner nozzles 13 as a third example. FIG. 17(a) schematically illustrates the hot runner apparatus 9 including the five hot runner nozzles 13 as viewed from the side of a main nozzle. FIG. 17(b) schematically illustrates the portion of a branching pipe line 20. In the hot runner apparatus 9 of the third example, a single hot runner nozzle 13 is provided vertically at a central portion of a horizontal runner portion 15 in its length direction.

An introducing port 17 of the hot runner apparatus 9 is located at a central portion of a hot runner block 14 in its length direction. A pipe line of an introducing runner portion 18 extends from the side of the introducing port 17 in a direction perpendicular to the length direction of the horizontal runner portion 15, bends in an oblique direction toward one end side immediately before reaching an elevation plane A, and reaches a position below the horizontal runner portion 15 on the above-described elevation plane A from the bent portion 41.

The pipe line of the introducing runner portion 18 further bends at the portion having reached the elevation plane A, and extends from the bent portion 42 toward the horizontal runner portion 15 in the elevation plane A, so as to be continuous with a portion of a pipe wall of a lower part of the horizontal runner portion 15. As with the above-described first example and second example, the portion at which the introducing runner portion 18 is continuous with the horizontal runner portion 15 is configured as the T-shaped branching pipe line 20.

As illustrated in the figure, the branching pipe line 20 in the third example is not located in the central portion of the horizontal runner portion 15 in its length direction. The above-described branching pipe line 20 is provided so as to be displaced toward the one end side of the horizontal runner portion 15 from the central portion of the horizontal runner portion 15 and be located at an intermediate portion 15a between two vertical runner portions 16.

Although the portion at which the introducing runner portion 18 is connected to the horizontal runner portion 15 preferably corresponds to the central portion of the horizontal runner portion 15 in its length direction, such a portion may be located at a position displaced from the central portion as needed. Also when the introducing runner portion 18 is continuous with a portion of a pipe wall of an upper part of the horizontal runner portion 15 as in the second example, the introducing runner portion 18 may be connected to a position displaced from the central portion of the horizontal runner portion 15.

The hot runner apparatus 9 of the third example also works in a manner similar to when the hot runner apparatuses 9 shown in the first example and the second example are incorporated into the injection stretch blow molding machines 1 and hollow molded bodies are produced at advanced timing for releasing preforms. More specifically, by disposing the T-shaped branching pipe line 20 in the intermediate portion displaced from the central portion of the horizontal runner portion 15 so that a molten resin 21 from the introducing runner portion 18 is fed thereinto, branching of the molten resin 21 can be made as with the first example and the second example. Thus, favorable hollow molded bodies can be produced also when the hot runner apparatus 9 shown in the third example is incorporated into an injection stretch blow molding machine 1 and hollow molded bodies are produced at advanced timing for releasing preforms.

### Fourth Example:

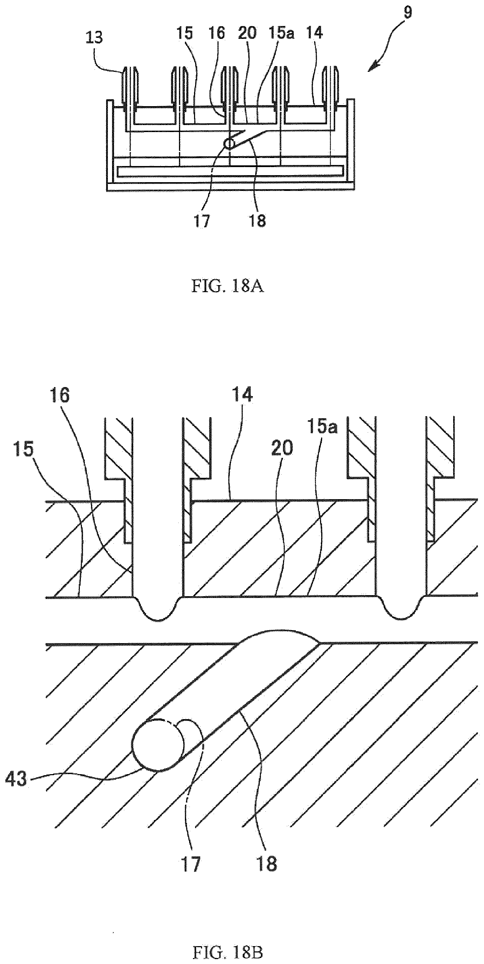

FIG. 18 illustrates a fourth example. FIG. 18(a) schematically illustrates a hot runner apparatus 9 including an odd number of hot runner nozzles 13 as viewed from the side of a main nozzle. FIG. 18 (b) schematically illustrates the portion of a branching pipe line 20.

As with the third example, an introducing runner portion 18 in the hot runner apparatus 9 shown as the fourth example is provided so as to be displaced toward one end side of a horizontal runner portion 15 from a central portion of the horizontal runner portion 15 and be continuous with an intermediate portion 15a between two vertical runner portions 16. In the hot runner apparatus 9 of the fourth example, a pipe line of the introducing runner portion 18 extends from the side of an introducing port 17 in a direction perpendicular to the length direction of the horizontal runner portion 15 and reaches a position below the horizontal runner portion 15 on an elevation plane A. The pipe line of the introducing runner portion 18 bends at the portion having reached the elevation plane A, and extends from the bent portion 43 in an obliquely upward direction in the elevation plane A, so as to be continuous with a portion of a pipe wall of a lower part of the horizontal runner portion 15.

In the fourth example, the branching pipe line 20 is provided in a Y shape in the portion where the introducing runner portion 18 is continuous with the horizontal runner portion 15 in the intermediate portion 15a of the horizontal runner portion 15 so as to conform with the introducing runner portion 18 extending in the obliquely upward direction. The branching pipe line 20 provided in the portion where the introducing runner portion 18 is continuous with the horizontal runner portion 15 in the present invention is not limited to those having a T shape as shown in the first to third examples. The branching pipe line 20 may have a Y shape as shown in the fourth example.

As discussed above, in the hot runner apparatus 9 of the fourth example, the Y-shaped branching pipe line 20 is provided in the intermediate portion displaced from the central portion of the horizontal runner portion 15, and the introducing runner portion 18 is continuous with the horizontal runner portion 15 at the above-described intermediate portion 15a. By causing a molten resin 21 from the introducing runner portion 18 to be fed into the branching pipe line 20, branching of the molten resin 21 can be made as with the above-described examples. Thus, favorable hollow molded bodies can be produced as with the first to third examples also when the hot runner apparatus 9 of the fourth example is incorporated into an injection stretch blow molding machine 1 and hollow molded bodies are produced at advanced timing for releasing preforms.

### Other Examples of Hot Runner Nozzle:

With regard to the hot runner nozzles 13, a passage for a molten resin, with which the vertical runner portion 16 is continuous, is located in a nozzle-axis center portion, and the shutoff pin 30 is provided so as to pass through the vertical runner portion 16 and the above-described passage in the nozzle-axis center portion. The hot runner nozzle that can be employed in the present invention, however, is not limited to those constructed in such a manner that the position of the shutoff pin is overlapped with the entire length of the passage for a molten resin. For example, it is also possible to employ a hot runner nozzle constructed in such a manner that a passage for a molten resin is provided in a portion displaced from a nozzle-axis center portion and the passage is overlapped with the position of a shutoff pin on the tip side of the nozzle as described in Japanese Patent Application Laid-Open No. Hei. 06-182815.

Although the hollow molded bodies produced for contrasting the comparative example with the example were PET bottles, a resin material used when carrying out the present invention is not limited The invention is set out in the appended set of claims. to PET.

### Reference Signs List

- 1 ...: injection stretch blow molding machine
- 2 ...: injection apparatus
- 3 ...: injection molding section
- 4 ...: injection molding mold
- 9 ...: hot runner apparatus
- 10 ...: cavity mold
- 11 ...: core mold
- 12 ...: gate
- 13 ...: hot runner nozzle
- 14 ...: hot runner block
- 15 ...: horizontal runner portion
- 16 ...: vertical runner portion
- 17 ...: introducing port
- 18 ...: introducing runner portion
- 20 ...: branching pipe line
- 21 ...: molten resin
- 22: central region
- 23: Ring-shaped region
- 24: lower temperature and higher viscosity resin
- 25: higher temperature and lower viscosity resin
- 26: arc-like region
- 37, 39 to 43: bent portion
- 38: region
- X: body portion of PET bottle
- A: elevation plane

## Claims

1. An injection stretch blow molding machine (1) comprising:
an injection molding section (3) that injects a molten resin (21) from an injection apparatus (2) to injection-mold preforms;
a stretch blow molding section (5) that obtains hollow molded bodies by stretch blow molding the preforms, having been released from an injection molding mold of the injection molding section (3), using a blow molding mold; and
an ejecting section (6) that releases the hollow molded bodies from the blow molding mold of the stretch blow molding section (5) and sends the hollow molded bodies to outside of the molding machine (1), wherein
the injection molding section (3) is provided above a hot runner apparatus (9),
said hot runner apparatus comprising:
a plurality of hot runner nozzles (13) arranged in a row and having an upward injection direction;
a horizontal runner portion (15) disposed below the hot runner nozzles (13) along a row direction of the hot runner nozzles (13);
vertical runner portions (16) upwardly extending from the horizontal runner portion (15) for guiding a molten resin (21) flowing through the horizontal runner portion (15) into the hot runner nozzles (13); and
an introducing runner portion (18) continuous with an intermediate portion (15a) of the horizontal runner portion (15) for guiding a molten resin (21) from an introducing port (17), into which the molten resin (21) from an injection apparatus (2) having an injection direction in a horizontal direction is fed, toward the horizontal runner portion (15),
wherein
the introducing runner portion (18) has a structure in which the introducing runner portion (18) is bent toward the horizontal runner portion (15) after reaching an elevation plane (A) passing through a position of the horizontal runner portion (15) in an up-and-down direction and continuous with the intermediate portion (15a) of the horizontal runner portion (15) in the elevation plane (A),
the hot runner apparatus (9) is provided under an injection molding mold (4) of the injection stretch blow molding machine (1),
the injection molding mold (4) including:
a plurality of preform molding portions; and a plurality of gates (12) continuous with the preform molding portions,
the plurality of hot runner nozzles (13) are connectable to the respective gates (12), and
said hot runner apparatus is constructed to allow a molten resin (21) injected by the respective hot runner nozzles (13) to be filled into the respective preform molding portions through the gates (12),
and
the injection molding section (3) has the injection molding mold having preform molding portions corresponding to the hot runner nozzles (3).

2. The injection stretch blow molding machine (1) according to claim 1, wherein the introducing runner portion (18) is continuous with any one of a lower part and an upper part of the horizontal runner portion (15).

3. The injection stretch blow molding machine (1) according to claim 1 or 2, wherein a portion at which the introducing runner portion (18) is continuous with the horizontal runner portion (15) is configured as a branching pipe line (20), and the branching pipe line (20) causes a resin located in an outer peripheral portion of a molten resin (21) slidably in contact with a pipe wall of the introducing runner portion (18) to branch into two directions and causes a moving direction of the branched resin to be biased toward a length direction of the horizontal runner portion (15) along a pipe wall of the horizontal runner portion (15) on a side with which the introducing runner portion (18) is continuous.

4. The injection stretch blow molding machine (1) according to any one of claims 1 to 3, wherein the structure of the introducing runner portion (18) suppresses temperature unevenness in a molten resin (21) in a circumferential direction of a horizontal cross-section of a pipe line of the vertical runner portion (16), the molten resin (21) being introduced from the introducing runner portion (18) through the horizontal runner portion (15) into the vertical runner portions (16).

5. The injection stretch blow molding machine (1) according to any of claims claim 1 to 4, wherein the injection molding mold is a molding mold for molding preforms with their mouth portions positioned on an upper side thereof by being injected and filled with a molten resin upwardly fed by the hot runner nozzles (3).

6. A method for branching a molten resin (21) in the hot runner apparatus (9) in an injection blow molding machine according to any one of claims 1 to 5, for branching the molten resin (21) toward the plurality of hot runner nozzles (13) of the hot runner apparatus (9) by horizontally feeding the molten resin (21) into the introducing runner portion (18) of the hot runner apparatus (9) by the injection apparatus (2), the method comprising:
changing a moving direction of the molten resin (21) fed into the introducing runner portion (18) and having a higher temperature and lower viscosity resin in an outer peripheral portion thereof due to shear heat generation to a direction along the elevation plane (A);
feeding the molten resin (21) into the intermediate portion (15a) of the horizontal runner portion (15) and thereby branching a moving direction of the higher temperature and lower viscosity resin from the intermediate portion (15a) of the horizontal runner portion (15) into two directions along the length direction of the horizontal runner portion; and
causing the branched higher temperature and lower viscosity resin to be biased toward the length direction of the horizontal runner portion (15) along the pipe wall of the horizontal runner portion (15) on the side with which the introducing runner portion (18) is continuous.

## Patentansprüche

1. Spritzstreckblasmaschine (1), welche umfasst:
einen Spritzgießabschnitt (3), der ein geschmolzenes Harz (21) aus einer Spritzvorrichtung (2) zu Spritzguss-Preformen spritzt;
einen Streckblasabschnitt (5), welcher durch Streckblasen der Preformen, nachdem diese aus einer Spritzgießform des Spritzgießabschnitts (3) gelöst wurden, unter Verwendung einer Blasform hohle Formkörper herstellt; und
einen Auswurfabschnitt (6), der die hohlen Formkörper aus der Blasform des Streckblasabschnitts (5) löst und die hohlen Formkörper nach außerhalb der Blasmaschine (1) sendet, wobei
der Spritzgießabschnitt (3) oberhalb einer Heißkanalvorrichtung (9) vorgesehen ist,
wobei die Heißkanalvorrichtung umfasst:
mehrere Heißkanaldüsen (13), die in einer Reihe angeordnet sind und eine Spritzrichtung nach oben aufweisen;
einen horizontalen Kanalabschnitt (15), der unterhalb der Heißkanaldüsen (13) entlang einer Reihenrichtung der Heißkanaldüsen (13) angeordnet ist,
vertikale Kanalabschnitte (16), die sich von dem horizontalen Kanalabschnitt (15) aus nach oben erstrecken, um ein geschmolzenes Harz (21), das durch den horizontalen Kanalabschnitt (15) fließt, in die Heißkanaldüsen (13) zu leiten; und
einen Einführungskanalabschnitt (18), der in einen Zwischenabschnitt (15a) des horizontalen Kanalabschnitts (15) übergeht, um ein geschmolzenes Harz (21) von einem Einleitungsanschluss (17), in den das geschmolzene Harz (21) von einer Spritzvorrichtung (2) eingespeist wird, die eine Spritzrichtung in einer horizontalen Richtung aufweist, in Richtung des horizontalen Kanalabschnitts (15) zu leiten,
wobei
der Einführungskanalabschnitt (18) eine Struktur aufweist, in welcher der Einführungskanalabschnitt (18) in Richtung des horizontalen Kanalabschnitts (15) umgebogen ist, nachdem er eine Elevationsebene (A) erreicht hat, die durch eine Position des horizontalen Kanalabschnitts (15) in einer Aufwärts-Abwärts-Richtung verläuft, und in den Zwischenabschnitt (15a) des horizontalen Kanalabschnitts (15) in der Elevationsebene (A) übergeht,
die Heißkanalvorrichtung (9) unter einer Spritzgießform (4) der Spritzstreckblasmaschine (1) vorgesehen ist,
wobei die Spritzgießform (4) aufweist:
mehrere Preform-Spritzgießabschnitte; und mehrere Angüsse (12), die in die Preform-Spritzgießabschnitte übergehen,
wobei die mehreren Heißkanaldüsen (13) mit den jeweiligen Angüssen (12) verbindbar sind, und
die Heißkanalvorrichtung dazu ausgebildet ist zu ermöglichen, dass ein geschmolzenes Harz (21), das von den jeweiligen Heißkanaldüsen (13) gespritzt wird, durch die Angüsse (12) hindurch in die jeweiligen Preform-Spritzgießabschnitte eingefüllt wird,
und
der Spritzgießabschnitt (3) die Spritzgießform aufweist, welche Preform-Spritzgießabschnitte aufweist, die den Heißkanaldüsen (3) entsprechen.

2. Spritzstreckblasmaschine (1) nach Anspruch 1, wobei der Einführungskanalabschnitt (18) in einen von einem unteren Teil und einem oberen Teil des horizontalen Kanalabschnitts (15) übergeht.

3. Spritzstreckblasmaschine (1) nach Anspruch 1 oder 2, wobei ein Abschnitt, an dem der Einführungskanalabschnitt (18) in den horizontalen Kanalabschnitt (15) übergeht, als eine sich verzweigende Rohrleitung (20) ausgebildet ist und die sich verzweigende Rohrleitung (20) bewirkt, dass ein Harz, das sich in einem äußeren Umfangsabschnitt eines geschmolzenen Harzes (21) befindet, der gleitend in Kontakt mit einer Rohrwand des Einführungskanalabschnitts (18) steht, sich in zwei Richtungen aufteilt, und bewirkt, dass eine Bewegungsrichtung des aufgeteilten Harzes in Richtung einer Längsrichtung des horizontalen Kanalabschnitts (15) entlang einer Rohrwand des horizontalen Kanalabschnitts (15) auf einer Seite, in welche der Einführungskanalabschnitt (18) übergeht, beaufschlagt wird.

4. Spritzstreckblasmaschine (1) nach einem der Ansprüche 1 bis 3, wobei die Struktur des Einführungskanalabschnitts (18) Temperaturungleichheiten in einem geschmolzenen Harz (21) in einer Umfangsrichtung eines horizontalen Querschnitts einer Rohrleitung des vertikalen Kanalabschnitts (16) unterdrückt, wobei das geschmolzene Harz (21) aus dem Einführungskanalabschnitt (18) über den horizontalen Kanalabschnitt (15) in die vertikalen Kanalabschnitte (16) eingeleitet wird.

5. Spritzstreckblasmaschine (1) nach einem der Ansprüche 1 bis 4, wobei die Spritzgießform eine Form zum Formen von Preformen ist, mit auf einer Oberseite derselben positionierten Mundstücken, indem sie gespritzt und mit einem geschmolzenen Harz gefüllt werden, das von den Heißkanaldüsen (3) aufwärts eingespeist wird.

6. Verfahren zum Verteilen eines geschmolzenen Harzes (21) in der Heißkanalvorrichtung (9) in einer Spritzstreckblasmaschine nach einem der Ansprüche 1 bis 5, zum Verteilen des geschmolzenen Harzes (21) auf die mehreren Heißkanaldüsen (13) der Heißkanalvorrichtung (9) durch horizontales Einspeisen des geschmolzenen Harzes (21) in den Einführungskanalabschnitt (18) der Heißkanalvorrichtung (9) durch die Spritzvorrichtung (2), wobei das Verfahren umfasst:
Ändern einer Bewegungsrichtung des geschmolzenen Harzes (21), das in den Einführungskanalabschnitt (18) eingespeist wird und aufgrund der Scherwärmeerzeugung ein Harz mit höherer Temperatur und niedrigerer Viskosität in einem äußeren Umfangsabschnitt desselben aufweist, in eine Richtung entlang der Elevationsebene (A) ;
Einspeisen des geschmolzenen Harzes (21) in den Zwischenabschnitt (15a) des horizontalen Kanalabschnitts (15) und dadurch Aufteilen einer Bewegungsrichtung des Harzes mit höherer Temperatur und niedrigerer Viskosität aus dem Zwischenabschnitt (15a) des horizontalen Kanalabschnitts (15) in zwei Richtungen entlang der Längsrichtung des horizontalen Kanalabschnitts; und
Bewirken, dass das aufgeteilte Harz mit höherer Temperatur und niedrigerer Viskosität in Richtung der Längsrichtung des horizontalen Kanalabschnitts (15) entlang der Rohrwand des horizontalen Kanalabschnitts (15) auf der Seite, in welche der Einführungskanalabschnitt (18) übergeht, beaufschlagt wird.

## Revendications

1. Machine de moulage par injection-étirage-soufflage (1) comprenant :
une section de moulage par injection (3) qui injecte une résine fondue (21) depuis un appareil d'injection (2) dans des préformes de moulage par injection ;
une section de moulage par étirage-soufflage (5) qui obtient des corps moulés creux par le moulage par étirage-soufflage des préformes, qui ont été libérées d'un moule de moulage par injection de la section de moulage par injection (3), à l'aide d'un moule de moulage par soufflage ; et
une section d'éjection (6) qui libère les corps moulés creux du moule de moulage par soufflage de la section de moulage par étirage-soufflage (5) et qui envoie les corps moulés creux à l'extérieur de la machine de moulage (1), dans laquelle
la section de moulage par injection (3) est prévue au-dessus d'un appareil à canal chaud (9),
ledit appareil à canal chaud comprenant :
une pluralité de buses de canal chaud (13) agencées dans une rangée et présentant une direction d'injection vers le haut ;
une partie horizontale de canal (15) disposée au-dessous des buses de canal chaud (13) le long d'une direction de rangée des buses de canal chaud (13) ;
des parties verticales de canal (16) s'étendant vers le haut à partir de la partie horizontale de canal (15) pour guider une résine fondue (21) s'écoulant à travers la partie horizontale de canal (15) dans les buses de canal chaud (13) ; et
une partie d'introduction de canal (18) continue avec une partie intermédiaire (15a) de la partie horizontale de canal (15) pour guider une résine fondue (21) depuis un orifice d'introduction (17), dans lequel la résine fondue (21) provenant d'un appareil d'injection (2) présentant une direction d'injection dans une direction horizontale est fournie, vers la partie horizontale de canal (15), dans laquelle
la partie d'introduction de canal (18) présente une structure dans laquelle la partie d'introduction de canal (18) est pliée vers la partie horizontale de canal (15) après avoir atteint un plan d'élévation (A) passant par une position de la partie horizontale de canal (15) dans une direction vers le haut et vers le bas et continue avec la partie intermédiaire (15a) de la partie horizontale de canal (15) dans le plan d'élévation (A),
l'appareil à canal chaud (9) est prévu au-dessous d'un moule de moulage par injection (4) de la machine de moulage par injection-étirage-soufflage (1),
le moule de moulage par injection (4) comportant :
une pluralité de parties de moulage de préformes ; et une pluralité de grilles (12) continues avec les parties de moulage de préformes,
la pluralité de buses de canal chaud (13) peuvent être reliées aux grilles (12) respectives, et
ledit appareil à canal chaud est construit pour permettre à une résine fondue (21) injectée par les buses de canal chaud (13) respectives d'être remplie dans les parties de moulage de préformes respectives à travers les grilles (12),
et
la section de moulage par injection (3) présente le moule de moulage par injection présentant des parties de moulage de préformes correspondant aux buses de canal chaud (3).

2. Machine de moulage par injection-étirage-soufflage (1) selon la revendication 1, dans laquelle la partie d'introduction de canal (18) est continue avec l'une quelconque parmi une partie inférieure et une partie supérieure de la partie horizontale de canal (15).

3. Machine de moulage par injection-étirage-soufflage (1) selon la revendication 1 ou 2, dans laquelle une partie au niveau de laquelle la partie d'introduction de canal (18) est continue avec la partie horizontale de canal (15) est configurée en tant que conduite de tuyau de ramification (20), et la conduite de tuyau de ramification (20) amène une résine située dans une partie périphérique extérieure d'une résine fondue (21) en contact de manière coulissante avec une paroi de tuyau de la partie d'introduction de canal (18) à se ramifier dans deux directions et amène une direction de déplacement de la résine ramifiée à être polarisée vers une direction de longueur de la partie horizontale de canal (15) le long d'une paroi de tuyau de la partie horizontale de canal (15) sur un côté avec lequel la partie d'introduction de canal (18) est continue.

4. Machine de moulage par injection-étirage-soufflage (1) selon l'une quelconque des revendications 1 à 3, dans laquelle la structure de la partie d'introduction de canal (18) supprime une irrégularité de température dans une résine fondue (21) dans une direction circonférentielle d'une coupe transversale horizontale d'une conduite de tuyau de la partie verticale de canal (16), la résine fondue (21) étant introduite à partir de la partie d'introduction de canal (18) à travers la partie horizontale de canal (15) dans les parties verticales de canal (16).

5. Machine de moulage par injection-étirage-soufflage (1) selon l'une quelconque des revendications 1 à 4, dans laquelle le moule de moulage par injection est un moule de moulage pour mouler des préformes avec leur partie d'embouchure positionnée sur un côté supérieur de celui-ci en étant injecté et rempli d'une résine fondue fournie vers le haut par les buses de canal chaud (3).

6. Procédé de ramification d'une résine fondue (21) dans l'appareil à canal chaud (9) dans une machine de moulage par injection-soufflage selon l'une quelconque des revendications 1 à 5, pour ramifier la résine fondue (21) vers la pluralité de buses de canal chaud (13) de l'appareil à canal chaud (9) en fournissant horizontalement la résine fondue (21) dans la partie d'introduction de canal (18) de l'appareil à canal chaud (9) par l'appareil d'injection (2), le procédé comprenant :
le changement d'une direction de déplacement de la résine fondue (21) fournie dans la partie d'introduction de canal (18) et ayant une résine de température supérieure et de viscosité inférieure dans une partie périphérique extérieure de celle-ci sous l'effet d'une génération de chaleur de cisaillement à une direction le long du plan d'élévation (A) ;
la fourniture de la résine fondue (21) dans la partie intermédiaire (15a) de la partie horizontale de canal (15) et ainsi la ramification d'une direction de déplacement de la résine de température supérieure et de viscosité inférieure depuis la partie intermédiaire (15a) de la partie horizontale de canal (15) dans deux directions le long de la direction de longueur de la partie horizontale de canal ; et
le fait d'amener la résine de température supérieure et de viscosité inférieure ramifiée à être polarisée vers la direction de longueur de la partie horizontale de canal (15) le long de la paroi de tuyau de la partie horizontale de canal (15) sur le côté de laquelle la partie d'introduction de canal (18) est continue.
